# EUROPEAN PATENT SPECIFICATION

(11) **EP 0 537 120 B1**
(45) Date of publication and mention of the grant of the patent: **06.03.1996**
(21) Application number: 92830536.6
(22) Date of filing: 29.09.1992
(51) Int. Cl.: F02B 27/02

(54) **An intake manifold unit for fuel injection internal combustion engines**
Einlasskrümmer für eine Einspritzbrennkraftmaschine
Collecteur d'admission pour un moteur à combustion interne à injection de carburant

(30) Priority: 10.10.1991 IT TO910764
(43) Date of publication of application: 14.04.1993
(73) Proprietor: FIAT AUTO S.p.A., I-10135 Torino (IT)
(72) Inventor: Occella, Sergio, I-10134 Torino (IT); Righes, Giuseppe, I-10086 Rivarolo Canavese (Torino) (IT); Arietti, Giulio, I-10135 Torino (IT); Ricci, Roberto, I-15027 Pontestura (Alessandria) (IT)
(74) Representative: Bosotti, Luciano

(56) References cited:
- EP-A- 0 201 180
- DE-A- 3 514 327
- US-A- 4 858 568
- US-A- 4 875 438
- PATENT ABSTRACTS OF JAPAN vol. 9, no. 252 (M-420)(1975) 9 October 1985 & JP-A-60 104 717
- PATENT ABSTRACTS OF JAPAN vol. 9, no. 330 (M-442)(2053) 25 December 1985 & JP-A-60 162 015

## Description

The present invention relates to an intake manifold unit for fuel injection internal combustion engines of the type indicated in the pre-characterising portion of appended claim 1.

### PRIOR ART

EP-A-201 180 discloses an intake manifold unit of the type specified above.

In order to make the best use of the space in the intake manifold to achieve optimal operation of the engine, manifolds of the type indicated above have already been tried. During the intake stroke in a cylinder, the movement of the piston creates a vacuum wave which travels through the manifold from the outlet which communicates with the cylinder. The vacuum wave reaches the opposite end of the intake manifold where it is reflected and returns as a pressure wave which is advantageous for refilling the cylinder. Since the wave travels at the speed of sound, it returns to the output of the manifold with a certain delay. If the engine is rotating slowly, the angle through which the engine shaft has rotated during the time taken for the wave to travel out and back is obviously small and the wave may return to the outlet of the manifold before the inlet valve has reached the intake stage. In order to prevent this problem, a manifold of the type indicated above, which has two ducts of different lengths in parallel between the cavity of the manifold and the outlet to the cylinder, has already been proposed. Below a certain rate of revolution, the obturator obstructs the shorter duct so that the outward travel of the vacuum wave and the return travel of the pressure wave described above take place through the longer duct, thus preventing the wave from returning to the cylinder before the inlet valve has reached the intake stage at low engine speeds. Above the predetermined rate of revolution, the obturator is opened so that the wave travels through the shorter duct. In this case, it is not necessary to obstruct the longer duct since the air in any event travels by the shortest route.

In solutions previously proposed, the obturator is constituted by a throttle obturator disposed in the first duct.

### BASIC TECHNICAL PROBLEM

Calculations with fluid-dynamic models and experimental findings have shown that, when closed, the obturator is subject to pressures which are of the order of 0.3 bars. This occurs at low and medium rates of revolution with the engine throttle valve fully open. It is thus very important to ensure that the seal of the obturator is effective, essentially for the following reasons:
- leakages through the closed obturator cause a considerable decline in the oscillatory fluid-dynamic behaviour of the manifold, compromising the establishment of the pressure wave in the long duct,
- experimental tests have shown that imperfect sealing of the various obturators associated with the various cylinders of the engine gives rise to leakages between the supplies to the various cylinders, thus compromising, to a lesser extent, the maximum torque of the engine and, to a greater extent, control over the Distribution of the air sent to the various cylinders which, in the case of a fuel injection engine, gives rise to uneven metering of the air/petrol mixture.

### PROBLEMS OF THE PRIOR ART

The main problem of the known solution mentioned above, which uses a throttle valve as the obturator, is that it is impossible to ensure an effective seal because of manufacturing tolerances and because of the need to leave a large clearance between each butterfly obturator and the respective duct in view of the considerable thermal expansion of the duct, which is made of aluminium. In an attempt to reduce this problem, the portions of the ducts in which the throttle obturators are fitted have been reamed out but, naturally, this makes the manufacturing process more complex and expensive. There is also a need to ensure a seal in the regions through which the shaft which supports the throttle obturators extends between one duct and another, in order to prevent pressure losses from the operative duct. Finally, a further problem lies in the fact that, even in the open position, the throttle obturator and its operating shaft constitute an appreciable obstruction of the inlet region of the power resonant duct, that is the "short" duct which operates at fast rates of revolution.

### OBJECT OF THE INVENTION

The object of the present invention is to overcome all the aforesaid problems.

### MAIN CHARACTERISTIC OF THE INVENTION

In order to achieve the aforesaid object, the subject of the invention is an intake manifold unit of the type indicated at the beginning of the present description and having the features set forth in the characterising portion of claim 1.

### ADVANTAGES

The advantages resulting from the aforementioned solution are many. First of all, the effective sealing of each obturator can be ensured simply and cheaply. The sealing surface is a flat surface in which the various ducts associated with the various cylinders of the engine open and against which the obturators are urged. The surface is easily accessible since the structure of the manifold can be broken down into at least two elements, the sealing surface forming part of the flat surface which connects one of the elements to the other. The sealing surface can thus be worked easily to ensure the maximum degree of sealing. It is not necessary, however, to ream out the duct as is required by the known solution. The various obturators can be carried by a single blade-like support member which is mounted pivotably on the body of the manifold by means of a shaft which does not pass through the ducts so that there is no further risk of the leakage of air which occurs in the known solution. Unlike what happens in the known solution, as has been seen, the ducts are left completely clear when the obturators are open.

### FURTHER CHARACTERISTICS OF THE INVENTION

The shaft which supports the obturators is preferably mounted on the element of the manifold unit which has the flat sealing surface. The obturators can thus be adjusted and checked easily and accurately before assembly.

According to the invention, the manifold unit includes a first hollow element which defines the first duct and the second duct for each cylinder and a second hollow element which defines the cavity. The surface of the first element which is connected to the second element is the flat sealing surface for the obturators. In a preferred embodiment, as already stated, the first element carries the shaft for pivoting the obturators as well as the device (which will be described below) for operating the shaft.

As already indicated, adjustment operations can therefore be carried out on the subassembly constituted by the first element and the various parts carried thereby, after which the second element can be fitted and the entire unit checked before it is finally mounted on the engine. In a preferred variant, the final portion of the duct which leads to each cylinder is constituted by an element separate from the first element to facilitate its mounting on the engine by automatic screwing devices.

A further preferred characteristic lies in the fact that the obturator with the face seal can pivot freely on the blade-like support member about an axis which lies in the plane of the sealing surface, the support member in turn being pivotable on the body of the manifold so that the obturator can adapt itself to the sealing surface to ensure a perfect seal.

### DETAILED DESCRIPTION OF A PREFERRED EMBODIMENT

Further characteristics and advantages of the invention will become clear from the description which follows with reference to the appended drawings, provided purely by way of non-limiting example, in which:
Figure 1 is a schematic, sectional view of an intake manifold unit according to the invention,
Figure 2 is a section taken on the line II-II of Figure 1,
Figures 3 and 3a are further, partially-sectioned side views of the unit of Figure 1 in two different operating conditions, and
Figures 4-7 are sections taken on the lines IV, V, VI, and VII of Figure 3, on an enlarged scale.

In the drawings, an intake manifold unit, generally indicated 1, has a body 2, for example, of light alloy, defining a cavity 3 into which open an inlet aperture 4 and, for each cylinder of the engine, an outlet 5 for communicating with an inlet duct in the cylinder head. Each outlet 5 communicates with the cavity 3 of the intake manifold by means of a duct 6 which branches into a first duct 7 and a second duct 8 which is longer than the first duct 7. Both the ducts 7 and 8 open into the cavity 3.

The body of the intake manifold includes a second element 2a which defines the cavity 3 of the intake manifold and an end portion 8a of the secondary duct 8. The body 2 also includes a first element 2b which defines the first duct 7 and the second duct 8 as well as a portion 6a in which the two ducts 7 and 8 converge. Finally, in the variant illustrated, the duct 6 which terminates with the outlet 5 constitutes a further separate element 2c. This latter characteristic facilitates its mountinq on the engine by means of automatic screwing devices. The element 2c could, however, be integral with the element 2b. With reference to the variant illustrated, the element 2c may be made of aluminium and be formed by pressure casting. The element 2b may be made of aluminium either by diecasting or by "lost foam" casting, or may even be of plastics material. The element 2a may also be constituted by a light casing of plastics material since, as will be seen, it requires no particular working or adjustment operations and does not have a load-bearing function.

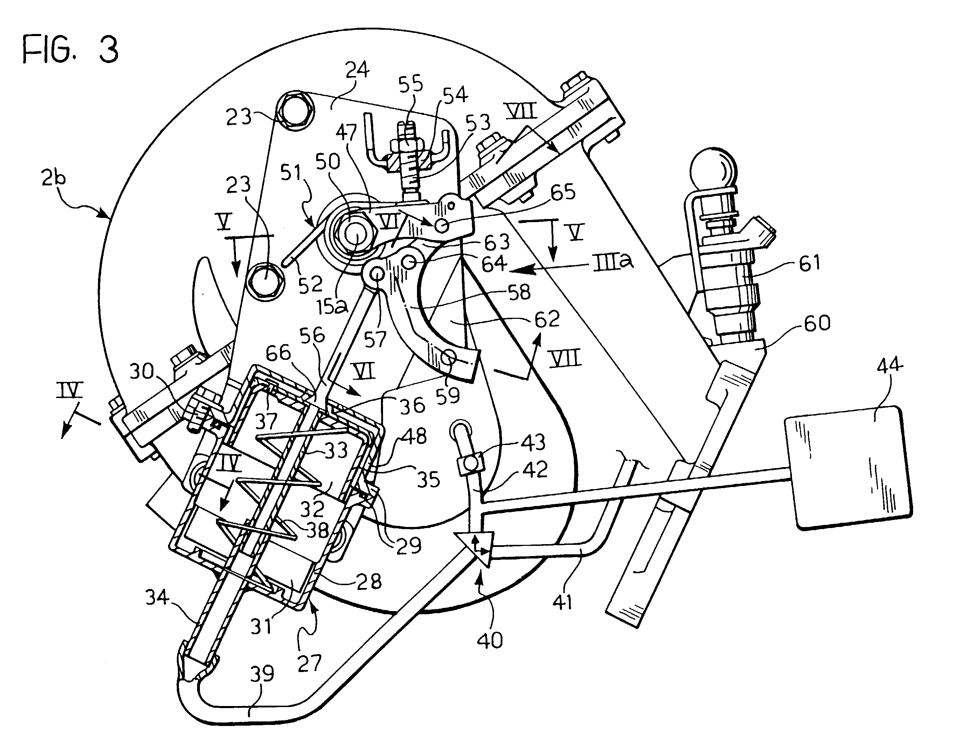

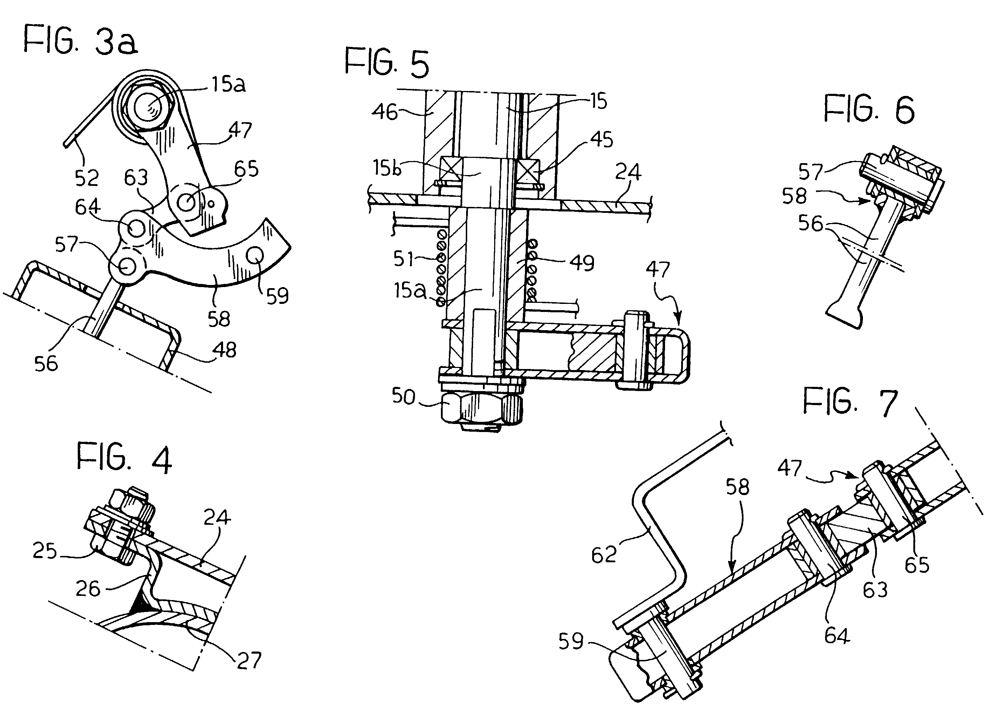

The elements 2a, 2b and 2c which form the manifold unit have facing flanges 9, 10 and 11 which are fixed together by screws 12. The outlet end of the duct 6 has a flange 13 with holes 14 for the engagement of screws for fixing it to the cylinder head. The end of the duct 6 also has a portion 60 for housing the injector 61 (see Figure 3) since the engine in question is a petrol-injection engine.

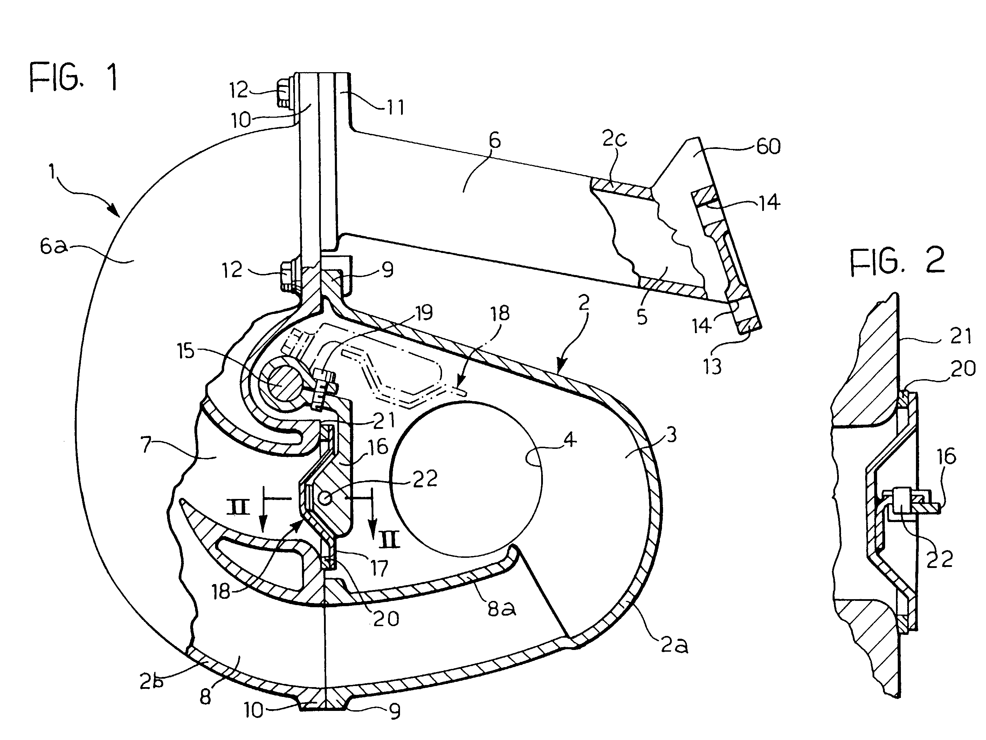

The element 2b of the body 2 of the manifold supports for rotation a shaft 15 to which a blade-like member 16 is keyed, the blade-like member 16 carrying an obturator 17 with a face seal which constitutes the valve 18 associated with the main duct 7 for each cylinder. The blade-like support member 16 may be a single member which, as indicated, carries the various obturators 17 corresponding to the various cylinders. Alternatively, there may be several separate support members 16, all keyed to the shaft 15. In the embodiment illustrated, the support member 16 has a ring-shaped end which is clamped around the shaft 15 by means of a screw 19. The obturator 17 is constituted by a disc carrying a sealing ring 20 which cooperates with a seat 21 constituted by the flat surface of the element 2b which defines the cavity 3 and in which the first duct 7 opens. The flat surface is coplanar with the surface which connects the element 2b to the element 2a and is thus easily accessible. Moreover, the surface 21 is on the element 2b which supports the shaft 15, thus affording the advantages set out in the introduction to the present description. Unlike known solutions which provide for the use of a throttle valve in the duct 7, the provision of a valve having an obturator with a face seal which cooperates with a flat surface ensures a perfect seal, with all the further advantages which have also been set out in the introduction to the present description. Again to ensure an optimal seal, the obturator 17 is mounted on the support member 16 by means of a pin 22 (see also Figure 2) so that it can pivot freely about an axis which is coplanar with, or at least very close to the plane of, the surface 21. When the support member 16 is in the closure position shown in continuous outline in Figure 1, the obturator 17 thus automatically adapts itself to its seat 21 to ensure a perfect seal. Figure 1 also shows the open position of the valve 18 in broken outline.

The valve can be moved between the open position and the closed position by means of any actuator, either an electrical actuator with an electromagnet or an electric motor or a hydraulic or electropneumatic actuator. In any case, the device which operates the shaft 15 is carried by the element 2b. During the assembly of the manifold unit, the subassembly constituted by the element 2b and the various parts carried thereby (that is, the shaft 15, the obturators 17 and the operating device) is therefore prepared first, after which the obturators are adjusted, the casing 2a is fitted and the out-of-line testing of the unit is carried out. The entire unit is then mounted on the engine, preferably by automatic screwing devices. In the embodiment illustrated, which has an element 2c which is separate from the element 2b, the element 2c is mounted on the engine first and then the unit constituted by the elements 2a and 2b is fitted.

Figures 3-7 show an embodiment of an electropneumatic actuator for the operating shaft 15. The operating device is intended to be controlled in dependence on the rate of revolution of the engine (or a parameter linked to the rate of revolution of the engine) by an electronic control unit which may be the control unit which controls the engine's petrol injection system. The invention may also be applied to a diesel engine, however, in which case it has an electronic control unit dedicated to the purpose specified above. With reference to Figures 3-7, a plate 24 which is fixed to the element 2b of the manifold by means of screws 23 supports the device for operating the blade-like member 16. A bracket 26 is fixed to the plate 24 by means of bolts 25 (Figure 4) and the cylindrical body 27 of a vacuum actuator is welded thereto. With reference to Figure 3, the body 27 includes two half-shells 28, 48 which define a cavity 31 and have facing flanges 29 connected by screws 30. Within the cavity 31 is a cup-shaped piston 32, the end wall of which carries a tubular rod 33 which fits slidably in a tubular rod 34 which is welded to the half-shell 28 and extends through the end wall thereof. The thickened periphery of a rubber diaphragm 35 is clamped between the two flanges 29 and its central portion is clamped between the end wall of the cup-shaped piston 32 and a disc 36 which is fixed to the end wall by means of pins 37 (one of which is visible in Figure 3). A helical compression spring- 38 is interposed between the end wall of the cup-shaped piston 32 and the end wall of the half-shell 28 so that it tends to keep the piston 32 in its end position adjacent the end wall of the half-shell 48. The cavity in the tubular rod 34 communicates, by means of a flexible duct 39, (shown schematically in Figure 3) with an outlet of a three-way solenoid valve 40 of any known type (also shown only schematically in Figure 3). The solenoid valve 40 is intended to be operated by the central control unit and is adapted to put the duct 39 selectively into communication with a duct 41 which is at atmospheric pressure or with a duct 42 which communicates with the cavity in the intake manifold and is thus subject to the vacuum existing therein. The duct 41 may be connected, for example, to the air filter of the internal combustion engine and the duct 42 is connected, as stated, to the cavity in the intake manifold. A non-return valve 43 is also fitted in the duct 42. A vacuum reservoir 44 (the function of which will become clear from the following), may also be connected to the duct 42.

With reference to Figure 5, the shaft 15 on which the blade-like member 16 (not visible in Figure 5) is supported for rotation by ball bearings 45 (only one of which is visible in the drawing) in a tubular element 46 which forms part of the element 2b of the body of the manifold. The shaft 15 has an end shank 15a which projects beyond the plate 24 and on which a fork-shaped lever 47 is mounted. One end of the lever 47 is mounted on the shank 15a and the lever bears against a spacer bush 49 which is also mounted on the shank 15a and bears against a portion 15b of the shaft 15 which has a larger diameter than the shank 15a. The lever 47 is fixed to the shank 15a by means of a nut 50 which is screwed onto a threaded end portion of the shank 15a. A helical spring 51 is also mounted around the bush 49 and has an end 52 which is connected to the plate 24, its opposite end acting on the lever 47 so that it tends to keep the lever in an end position in which it bears against an adjustable stop constituted by a grub screw 53 which is screwed into a female-threaded member 54 carried by the plate 23 and is locked by a lock nut 55. When the lever 47 is in its end position, the shaft 15 is in an angular position which corresponds to the open positions of the obturators 17. The vacuum actuator 27 serves to move the obturators 17 to their closed positions against the action of the spring 38 of the actuator and, in particular, of the spring 51 which has a greater loading than the spring 38. The lever 47 is connected to the rod 33 of the actuator by the following kinematic transmission. The piston 32 of the vacuum actuator 27 has a further rod portion 56, of which the end that is outside the casing of the actuator 27 is articulated at 57 to a lever 58 (see Figures 3, 7). The lever 58 is a fork-shaped lever which is articulated to a pin 59 carried by an appendage 62 of the plate 24. The lever 58 is connected to the lever 47 by a connecting rod 63 which is articulated to the two levers by pins 64 and 65. The rod portion 56 is connected to the disc 36 by a hemispherical end head 66 which is housed in a corresponding seat in the disc 36. The ball joint thus formed enables the rod portion 56 to adopt an attitude in which it is inclined to the axis of the cylindrical body of the actuator 27 when the lever 58 is pivoted from the position shown in Figure 3 towards the position of Figure 3a, which corresponds to the closure of the obturator 17.

As can be seen, in the solution described above, the biasing spring 51 tends to keep the obturators in the open positions and the activation of the vacuum actuator closes the obturators. This arrangement is preferable to the reverse arrangement in which the spring biases the obturator towards the closed position, since in that second case, the spring would have to have a very high loading to ensure an effective seal. Moreover, for reasons of speed of actuation when the threshold speed is passed as the vehicle is accelerating, it is better for the obturators to be opened by the biasing spring.

The structure of the actuator described above is also optimal in view of the fact that it is necessary to ensure the effective sealing of the obturators when they are closed, in spite of the pulsations of the pressure in the duct, and in view of the fact that the vacuum available is quite modest. Moreover, the use of a diaphragm of the type described above enables the diametral bulk of the actuator to be limited, thus increasing its stroke for a given amount of work. The solution illustrated also minimises the travel of the diaphragm whilst ensuring an effective ratio between the forces on the diaphragm and on the operating lever of the obturator in the closure position.

In operation, below the transition speed mentioned above, the solenoid valve 40 puts the duct 39 into communication with the duct 42 so that, whenever the vacuum in the intake manifold is sufficient for actuation, the vacuum acts on the actuator and the obturator 17 is locked in the closed condition. A sudden acceleration will find the obturator closed and, even when the engine throttle-valve is fully open, it cannot be opened because of presence of the valve 43. As the transition speed is passed, the solenoid valve 40 puts the duct 39 into communication with the duct 41, closing the communication with the duct 42 and thus putting the actuator into communication with the region which is at atmospheric pressure. In these circumstances, the actuator is deactivated and the obturator is reopened by its return spring (51). The speed of the two movements can be adjusted by calibrating the two outlets of the valve 40 which are connected to the ducts 41 and 42. With each gear change, the engine is brought to its idling speed and the vacuum available in the intake manifold thus enables the closure condition of the actuator to be re-established (naturally provided that the rate of rotation of the engine in the new gear, which is higher than the previous gear, is below the transition speed). If it appears from the setting-up of the system that, in the event of too rapid a gear change there is not sufficient time and/or vacuum to activate the obturator, the system may have the vacuum reservoir 44 already mentioned above.

Naturally, the principle of the invention remaining the same, the details of construction and forms of embodiment may be varied widely with respect to those described and illustrated, without thereby departing from the invention as defined in the appended claims.

For example, with reference to Figure 1, the first duct could be constituted simply by an opening in the side of the second duct 8, communicating directly with the cavity 3.

## Claims

1. An intake manifold unit for fuel injection internal combustion engines, including:
- a body (2) which can be fixed to the cylinder head of the engine and defines an inlet (4) which communicates with a cavity (3) in the body and a plurality of outlets (5) for association with the various cylinders of the engine, each outlet (5) communicating with the cavity (3) by means of a duct (6) which branches into a first duct (7) and a second duct (8) which is longer than the first duct (7) and is in parallel therewith, the body (2) including at least one first element (2b) which defines the first duct (7) and the second duct (8) for each cylinder, and at least one second element (2a) which defines the cavity (3), the first element (2b) having a flat surface (21) for connection with the second element (2a), and
- an obturator (17) for obstructing the first duct (7) when the rate of revolution of the engine is below a predetermined threshold value, the obturator (17) having a face seal and being mounted pivotably on the body (2) of the manifold to cooperate with a flat sealing surface (21) which is constituted by a wall of the cavity (3), and in which the first duct (7) opens,
characterised in that
- said flat sealing surface (21) constitutes part of the flat coupling surface.

2. An intake manifold unit according to claim 1, characterised in that said at least first and second elements (2b, 2a) are fitted together and in that the body of the manifold includes a shaft (22) for supporting the obturator (17) which can pivot on the same element (2b) of the unit which has the sealing surface (21).

3. A manifold unit according to Claim 2, characterised in that the end portion of the duct (6) which leads to each cylinder is constituted by a separate element (2c) which is fitted onto the first element (2b).

4. A manifold unit according to Claim 1, characterised in that the obturator (17) with the face seal can pivot freely about an axis which lies substantially in the plane of the sealing surface (21) on a blade-like support member (16) which in turn can pivot on the body of the manifold.

5. A manifold unit according to Claim 2, characterised in that the element (2b) which has the flat sealing surface (21) and which supports the shaft (15) of the obturator (17) also supports a device for operating the obturator, including an actuator for rotating the shaft (15).

6. A manifold unit according to Claim 5, characterised in that the operating device is an actuator with a diaphragm, the actuator operating under vacuum and including a body (27) with an internal cavity (31) defined by a diaphragm (35) and a piston (32) which is connected rigidly to the diaphragm and is also connected to the shaft (15) by means of a lever transmission (56, 58, 63, 47), resilient means biasing the lever transmission towards the position which corresponds to the opening of the obturator (17) and the actuator being arranged to close the obturator as a result of its activation.

7. A manifold unit according to Claim 6, characterised in that the chamber (31) of the actuator (27) can be connected selectively to a region which is at atmospheric pressure or to the intake manifold of the engine, by means of a solenoid valve (40).

8. A manifold unit according to Claim 7, characterised in that the solenoid valve (40) is connected to the intake manifold with the interposition of a non-return valve (43).

9. A manifold unit according to Claim 8, characterised in that the communication duct between the solenoid valve (40) and the intake manifold is also connected to a vacuum reservoir (44).

## Patentansprüche

1. Einlaßkrümmereinheit für Einspritzverbrennungsmotoren, umfassend:
- einen Körper (2), der am Zylinderkopf des Motors befestigt werden kann und einen Einlaß (4), der mit einem Hohlraum (3) im Körper kommuniziert, und mehrere Auslässe (5) definiert, die den verschiedenen Zylindern des Motors zugeordnet sind, wobei jeder Auslaß (5) mit dem Hohlraum (3) über einen Kanal (6) in Verbindung steht, welcher sich in einen ersten Kanal (7) und einen zweiten Kanal (8) aufteilt, der länger ist als der erste Kanal (7) und dazu parallel verläuft, wobei der Körper (2) wenigstens ein erstes Element (2b), welches den ersten Kanal (7) und den zweiten Kanal (8) für jeden Zylinder definiert, und wenigstens ein zweites Element (2a), welches den Hohlraum (3) definiert, umfaßt, wobei das erste Element (2b) eine ebene Oberfläche (21) aufweist, um eine Verbindung mit dem zweiten Element (2a) zu ermöglichen, und
- einen Verschluß (17) zum Verschließen des ersten Kanals (7) falls die Drehzahl des Motors unter einem vorbestimmten Grenzwert liegt, wobei der Verschluß (17) eine plane Dichtung aufweist und am Körper (2) des Einlaßkrümmers verschwenkbar montiert ist, um mit einer ebenen Dichtfläche (21) zusammenzuarbeiten, welche von einer Wand des Hohlraumes (3) gebildet ist und zu welcher sich der erste Kanal (7) hin öffnet,
dadurch gekennzeichnet, daß
- die ebene Dichtfläche (21) einen Teil der ebenen Verbindungsfläche darstellt.

2. Einlaßkrümmereinheit nach Anspruch 1, dadurch gekennzeichnet, daß die zumindest ersten und zweiten Elemente (2b, 2a) zusammengebaut sind und daß der Körper des Einlaßkrümmers einen Stift (22) zum Tragen des Verschlusses (17) umfaßt, welcher um jenes Element (2b) der Einheit verschwenkbar ist, das die Dichtfläche (21) aufweist.

3. Einlaßkrümmereinheit nach Anspruch 2, dadurch gekennzeichnet, daß das Endteil des Kanals (6), welches zu jedem Zylinder führt, von einem gesonderten Element (2c) gebildet wird, welches an das erste Element (2b) angebaut ist.

4. Einlaßkrümmereinheit nach Anspruch 1, dadurch gekennzeichnet, daß der Verschluß (17) mit der planen Dichtung frei verschwenkbar um eine Achse ist, welche im wesentlichen in der Ebene der Dichtfläche (21) auf einem blattförmigen Tragteil (16) liegt, welcher wiederum am Körper des Einlaßkrümmers verschwenkbar ist.

5. Einlaßkrümmereinheit nach Anspruch 2, dadurch gekennzeichnet, daß das Element (2b), welches die ebene Dichtfläche (21) aufweist und welches den Stift (15) des Verschlusses (17) trägt, auch eine Vorrichtung zur Betätigung des Verschlusses trägt, die einen Aktuator zum Drehen des Stifts (15) umfaßt.

6. Einlaßkrümmereinheit nach Anspruch 5, dadurch gekennzeichnet, daß die Betätigungsvorrichtung ein Aktuator mit einer Membran ist, wobei der Aktuator unter Vakuum arbeitet und einen Körper (27) mit einem internen Hohlraum (31) umfaßt, welcher durch eine Membran (35) und einen Kolben (32) definiert ist, welcher starr mit der Membran verbunden ist und auch mit dem Stift (15) mittels einer Hebelübertragung (56, 58, 63, 47) verbunden ist, wobei eine Federeinrichtung die Hebelübertragung gegen die Position, welche der öffnung des Verschlusses (17) entspricht, vorspannt und wobei der Aktuator so angeordnet ist, daß er den Verschluß als Folge seiner Aktivierung schließt.

7. Einlaßkrümmereinheit nach Anspruch 6, dadurch gekennzeichnet, daß die Kammer (31) des Aktuators (27) selektiv mit einem Bereich, welcher unter atmosphärischem Druck steht, oder mit dem Einlaßkrümmer des Motors mittels eines Solenoid-Ventils (40) verbunden werden kann.

8. Einlaßkrümmereinheit nach Anspruch 7, dadurch gekennzeichnet, daß das Solenoid-Ventil (40) unter Einschaltung eines Rückschlagventils (43) mit dem Einlaßkrümmer verbunden ist.

9. Einlaßkrümmereinheit nach Anspruch 8, dadurch gekennzeichnet, daß der Verbindungskanal zwischen dem Solenoid-Ventil (40) und dem Einlaßkrümmer auch mit einem Vakuum-Reservoir (44) verbunden ist.

## Revendications

1. Unité de collecteur d'admission pour moteurs à combustion interne à injection de carburant, comprenant :
- un corps (2) qui peut être fixé à la culasse du moteur et définit une entrée (4) qui communique avec une cavité (3) prévue à l'intérieur du corps et une pluralité de sorties (5) destinées à être associées aux différents cylindres du moteur, chaque sortie (5) communiquant avec la cavité (3) au moyen d'un conduit (6) qui se divise en un premier conduit (7) et un deuxième conduit (8) qui est plus long que le premier conduit (7) et est parallèle à celui-ci, le corps (2) comprenant au moins un premier élément (2b) qui définit le premier conduit (7) et le deuxième conduit (8) prévus pour chaque cylindre, et au moins un deuxième élément (2a) qui définit la cavité (3), le premier élément (2b) possédant une surface plate (21) destinée à l'assemblage avec le deuxième élément (2a), et
- un obturateur (17) destiné à obstruer le premier conduit (7) lorsque la vitesse de rotation du moteur est inférieure à une valeur de seuil prédéterminée, l'obturateur (17) ayant une garniture d'étanchéité de face et étant monté pour pivoter sur le corps (2) du collecteur, pour coopérer avec une surface d'étanchéité plate (21) qui est constituée par une paroi de la cavité (3), et dans laquelle le premier conduit (7) débouche,
caractérisé en ce que
- ladite surface d'étanchéité plate (21) fait partie de la surface d'accouplement plate.

2. Unité de collecteur d'admission selon la revendication 1, caractérisée en ce que lesdits au moins premier et deuxième éléments (2b, 2a) sont accouplés l'un à l'autre et en ce que le corps du collecteur comprend un arbre (22) destiné à supporter l'obturateur (17) qui pivote sur le même élément (2b) de l'unité qui présente la surface d'étanchéité (21).

3. Unité de collecteur selon la revendication 2, caractérisée en ce que la partie d'extrémité du conduit (6) qui conduit à chaque cylindre est constituée par un élément séparé (2c) qui est monté sur le premier élément (2b).

4. Unité de collecteur selon la revendication 1, caractérisée en ce que l'obturateur (17) portant la garniture d'étanchéité de face peut pivoter librement, autour d'un axe qui se trouve sensiblement dans le plan de la surface d'étanchéité (21), sur un élément support en forme de lame (16) qui, à son tour, peut pivoter sur le corps du collecteur.

5. Unité de collecteur selon la revendication 2, caractérisée en ce que l'élément (2b) qui possède la surface d'étanchéité plate (21) et qui supporte l'arbre (15) de l'obturateur (17) supporte aussi un dispositif servant à actionner l'obturateur, lequel comprend un actionneur servant à faire tourner l'arbre (15).

6. Unité de collecteur selon la revendication 5, caractérisé en ce que le dispositif d'actionnement est un actionneur muni d'une membrane, l'actionneur agissant sous dépression et comprenant un corps (27) qui présente une cavité intérieure (31) définie par une membrane (35) et un piston (32) qui est relié rigidement à la membrane et est aussi relié à l'arbre (15) au moyen d'une transmission à leviers (56, 58, 63, 47), des moyens élastiques servant à rappeler la transmission à leviers vers la position qui correspond à l'ouverture de l'obturateur (17) et l'actionneur étant agencé pour fermer l'obturateur en réponse à son activation.

7. Unité de collecteur selon la revendication 6, caractérisée en ce que la chambre (31) de l'actionneur (27) peut être reliée sélectivement à une région qui est à la pression atmosphérique ou au collecteur d'admission du moteur, au moyen d'une électrovalve (40).

8. Unité de collecteur selon la revendication 7, caractérisée en ce que l'électrovalve (40) est reliée au collecteur d'admission avec interposition d'un clapet anti-retour (43).

9. Unité de collecteur selon la revendication 8, caractérisée en ce que le conduit de communication entre l'électrovalve (40) et le collecteur d'admission est aussi relié à un réservoir de dépression (44).
